Europäisches Patentamt

European Patent Office

Office européen des brevets

(19)

(11) Publication number: **0 228 903**

**A2**

(12) # EUROPEAN PATENT APPLICATION

(21) Application number: 86310119.2

(22) Date of filing: 23.12.86

(51) Int. Cl.⁴: **G11B 5/265** , G11B 25/10 , G11B 15/675

(30) Priority: 28.12.85 JP 293525/85

(43) Date of publication of application:
15.07.87 Bulletin 87/29

(84) Designated Contracting States:
DE FR GB IT

(71) Applicant: SONY CORPORATION
7-35 Kitashinagawa 6-Chome Shinagawa-ku
Tokyo 141(JP)
Applicant: Hewlett-Packard Company
Mail Stop 20 B-O 3000 Hanover Street
Palo Alto California 94304(US)

(72) Inventor: Ohta, Toshiro c/o Patents Division
Sony Corporation 6-7-35 Kitashinagawa
Shinagawa-ku Tokyo 141(JP)
Inventor: Henze, Richard H.
c/o Hewlett-Packard Company 3000 Hanover
Street
Palo Alto California 94304-1181(US)
Inventor: Clifford, George
c/o Hewlett-Packard Company 3000 Hanover
Street
Palo Alto California 94304-1181(US)
Inventor: Spenner, Bruce F.
c/o Hewlett-Packard Company 3000 Hanover
Street
Palo Alto California 94304-1181(US)

(74) Representative: Thomas, Christopher Hugo et
al
D Young & Co 10 Staple Inn
London WC1V 7RD(GB)

(54) **Magnetic heads.**

(57) A magnetic head (10) is provided with a primary magnetic gap (121) and first and second auxiliary magnetic gaps (146, 147, 166, 167) on respective sides of the primary magnetic gap (212), all extending transversely with respect to the length of a magnetic tape (22). Each of the first and second auxiliary magnetic gaps (146, 147, 166, 167) is transversely separated into two sections, each having a portion transversely overlapping with the primary magnetic gap (121). One of the first and second auxiliary magnetic heads (146, 147, 166, 167) lo-cated at the trailing side with respect to the tape driving direction serves as an erasing head for eras-ing part of the information recorded by means of the primary magnetic gap (121).

FIG.1

## MAGNETIC HEADS

This invention relates to magnetic heads.

In recent years, high-density recording on magnetic tape has been practised. A large number of parallel recording tracks are formed on a magnetic tape, and the width of each individual recording track is narrow. Such narrow tracks are arranged without guard bands or with guard bands of minimal width therebetween. For recording and reproducing information in such as way, high precision in alignment of a magnetic head is essential for avoiding cross-talk between adjacent recording tracks, as otherwise, the signal-to-noise (S/N) ratio is degraded and error codes occur in digital recording, due to the cross-talk.

In recent high-density recording, the width of the recording tracks has been narrowed to several tens of $\mu$m or less. For such high-density recording and reproducing it is essential to limit displacement of the magnetic tape with respect to the magnetic head to within a few percent of the tape width. This requires high accuracy in the mechanical construction of the tape drive system, and this increases the cost.

To avoid the need for such high accuracy in the mechanical construction of the tape drive system and in the magnetic head position, there has been proposed a so-called 'tunnel head". Such a magnetic head is provided with auxiliary magnetic gaps at positions downstream of a main magnetic gap. The auxiliary magnetic gaps are offset from the tape run axis, and designed to cooperate with the edges of the recording track. The auxiliary magnetic gaps serve as erasers for erasing both side edges of the recording track. Such auxiliary magnetic gaps thus assure erasure of old information while new information is recorded, even when the magnetic head is slightly displaced from a predetermined recording or reproducing position.

Such a tunnel head is useful for recording and reproducing information, when the magnetic tape is driven in a single direction, but of course single direction recording and reproducing increases the access time. To shorten the access time, recording and reproducing in both directions would be preferred, but proposed tunnel heads are not suitable for this.

According to the present invention there is provided a magnetic head for recording and reproducing information on a magnetic tape having a plurality of recording tracks thereon, the magnetic head comprising:

a first magnetic gap for recording and reproducing information on each of said recording tracks of said magnetic tape; and

a second magnetic gap positioned at one side of said first magnetic gap, said second magnetic gap being arranged to erase recorded information on an associated recording track leaving a predetermined track width of recorded information, in response to an erase signal;

characterised by:

a third magnetic gap positioned at the other side of said first magnetic gap, said third magnetic gap being arranged to erase recorded information on an associated recording track leaving said predetermined track width of recorded information, in response to said erase signal; and

means for selectively applying said erase signal to one of said second and third magnetic gaps according to the tape driving direction.

Thus an embodiment of magnetic head according to the present invention is provided with a primary magnetic gap and first and second auxiliary magnetic gaps at respective sides of the primary magnetic gap. The magnetic gaps extend transversely with respect to the longitudinal axis of a magnetic tape. Each of the first and second auxiliary magnetic gaps may be transversely separated into two section, each of the sections having a portion transversely overlapping with the primary magnetic gap by a given distance.

In this arrangement, the one of the first and second auxiliary magnetic head located at the trailing side with respect to the tape driving direction serves as an eraser for erasing part of the information recorded by the primary magnetic gap, due to the portion overlapping with the primary magnetic gap. This successfully prevents cross-talk between adjacent tracks even when the magnetic tape position is displaced from the normal or standard position. Moreover, since the auxiliary magnetic gaps are provided at both sides of the primary magnetic gap, the auxiliary magnetic gaps always limit the track width for recording information, and also allow recording and reproducing in both forward and reverse driving directions of the magnetic tape.

Preferably, each of the second and third magnetic gaps comprises first and second components separated from each other with a clearance therebetween, the width of the clearance corresponding to the predetermined track width to be left on the recording track, and the clearance being smaller than the length of the first magnetic gap.

The means for selectively applying an erase signal will normally select that one of the second and third magnetic gaps which is positioned at the trailing side of the first gap in relation to the driving direction of the magnetic tape. The magnetic head may comprise first, second and third head blocks which are magnetically shielded from each other, the first block being positioned between the second and third blocks and formed with the first magnetic gap, and the second and third blocks being respectively formed with the second and third gaps. Each of the second and third blocks may be divided into first, second and third sub-blocks which are magnetically shielded from each other, the first sub-block being interposed between the second and third sub-blocks, and the first and second components of the second and third magnetic gaps being formed parallel to the first magnetic gap in the second and third sub-blocks.

In a preferred embodiment, the length of the first magnetic gap is so selected that half a difference between the length of the first magnetic gap and the height of the first sub-block of each of the second and third head blocks corresponds to a possible maximum offset in positioning of the magnetic tape, and that half a difference between the overall height of the magnetic head and the length of the first magnetic gap is in a range from zero to the possible maximum offset in positioning of the magnetic tape. Each of the first and second components of the second and third magnetic gaps has an overlapping section overlapping with an associated end section of the first magnetic gap of a predetermined magnitude for erasing signals on the recording track on the magnetic tape corresponding to the overlapping section of the first and second components.

Embodiments of magnetic head in accordance with the invention are suitable for high-density recording on a magnetic tape.

According to the present invention there is also provided a combination of a disc drive and a magnetic tape cartridge;
characterised by:
a disc drive including a disc drive head formed by a magnetic head comprising:
a first magnetic gap for recording and reproducing information on recording tracks of a magnetic tape;
a second magnetic gap positioned at one side of said first magnetic gap, said second magnetic gap being arranged to erase recorded information on an associated recording track leaving a predetermined track width of recorded information, in response to an erase signal;
a third magnetic gap positioned at the other side of said first magnetic gap, said third magnetic gap being arranged to erase recorded information on an associated recording track leaving said predeterined track width of recorded information, in response to said erase signal; and
means for selectively applying said erase signal to one of said second and third magnetic gaps according to the tape driving direction;
and by:
said magnetic tape cartridge being a disc-drive-compatible magnetic tape cartridge comprising:
said magnetic tape suitable for transferring data between said magnetic tape and said disc drive head;
means for registering a portion of said magnetic tape at a location at which data can be transferred between said magnetic tape and said disc drive head;
means for feeding said magnetic tape past said location; and
means for storing said magnetic tape.

Preferably the means for registering in the magnetic tap cartridge comprises means for aligning the tape cartridge with the disc drive when the tape cartridge is loaded into the disc drive and means for guiding the tape within the tape cartridge such that, when the tape cartridge is aligned with the disc drive, the tape is registered with the location. The means for storing the tape may comprise a pair of tape reels having aligned rotational axes.

The invention will now be described by way of example with reference to the accompanying drawings, throughout which like parts are referred to by like references, and in which:

Figure 1 is a perspective view of an embodiment of magnetic head according to the present invention;

Figure 2 is a front elevation of the embodiment of Figure 1;

Figures 3 and 4 show diagrammatically the recording of information on a track in a forward and a reverse direction respectively;

Figure 5 shows diagrammatically a magnetic tape having a plurality of recording tracks; and

Figure 6 is a plan view of a disc-drive-compatible magnetic tape cartridge.

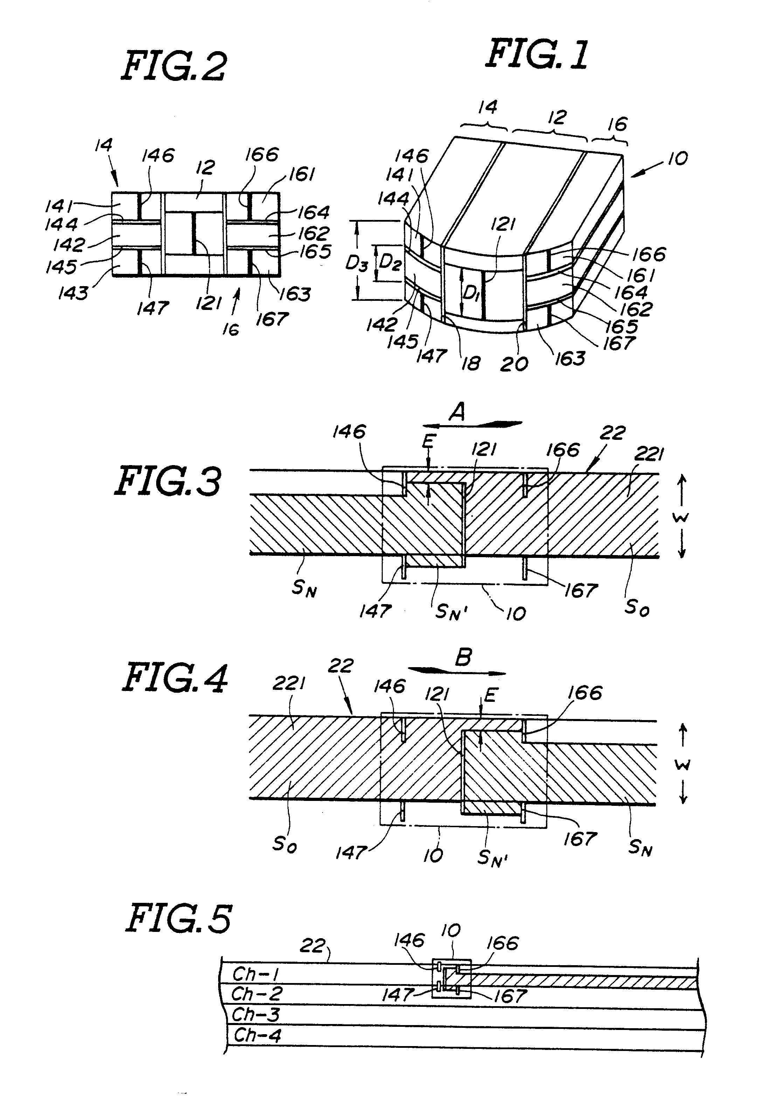

Referring first to Figure 1 and 2, an embodiment of magnetic head 10 according to the present invention comprises a main head block 12 and side head blocks 14 and 16 provided on respective sides of the main head block 12. Respective shielding plates 18 and 20 are interposed between the main head block 12 and the side head blocks 14 and 16. The side head block 14 comprises three sub-blocks 141, 142 and 143 stacked on each other, and each formed of a magnetically conductive material, such as permalloy. Respective shielding plates 144 and 145 are disposed between the sub-blocks 141 and 142, and 142 and 143 to form magnetic shields. Similarly, the side head block 16 comprises three sub-blocks 161, 162 and 163 formed of magnetically conductive material, such as permalloy. Respective shielding plates 164 and 165 are inserted between the sub-blocks 161 and 162, and 162 and 163.

The main head block 12 is formed with a magnetic gap 121 for recording and reproducing information on a magnetic tape 22 (shown in Figures 3 and 4). Similarly, the sub-blocks 141 and 143 and the sub-blocks 161 and 162 are formed with respective magnetic gaps 146, 147, 166 and 167. The magnetic gap 121 in the main head block 12 will be referred to as the primary magnetic gap, and the magnetic gaps 146, 147, 166 and 167 formed in the side head blocks 14 and 16 will be referred to as the auxiliary magnetic gaps.

The primary magnetic gap 121 extends transversely to the tape driving direction and is located at the middle of the magnetic head block 12. On the other hand, each of the auxiliary magnetic gaps 146, 147, 166 and 167 extends transversely to the tape driving direction across the associated sub-block 141, 143, 161 or 163.

Assuming that the length of the primary magnetic gap 121 is D1, the distance between the opposing ends of the sub-blocks 141 and 143, and 161 and 163 is D2, and the overall height of the side head blocks 14 and 16 is D3, these dimensions preferably satisfy the following formula:

$$D3 \geq D1 > D2$$

In general, the length D1 of the primary magnetic gap 121 corresponds to the width W (shown in Figures 3 and 4) of a recording track 221 on the magnetic tape 22. However, in view of possible fluctuation of the magnetic tape position with respect to the magnetic head 10, it is preferable to determine the length D1 of the primary magnetic gap 121 to satisfy the following formula, where E is the possible maximum fluctuation or offset in the position of the magnetic tape:

$$(D1 - D2)/2 = E \ ...(2)$$
$$D3 - D1)/2 = 0 \ to \ E \ ...(3)$$

With this arrangement, when the tape 22 is driven in the forward direction as shown by an arrow A in Figure 3, an erasing signal is applied to the auxiliary magnetic gaps 146 and 147 which are located at the trailing side with respect to the primary magnetic gap 121. The auxiliary magnetic gaps 146 and 147 thus partially erase information recorded on the associated track 221. Since the auxiliary magnetic gaps 146 and 147 are so related with the primary magnetic gap 121 as to satisfy the formulae (2) and (3), any old signal SO recorded in an earlier recording operation can be successfully erased, even when the magnetic tape position is offset from the magnetic head block 12 by the maximum offset E. Moreover, the portion of the new signal SN, recorded out of the track 221 due to offset of the magnetic tape position, can be successfully erased by the auxiliary magnetic gaps 141 and 143. Therefore, cross-talk in reproducing the new signal SN can be successfully avoided.

On the other hand, when the tape 12 is driven in the reverse direction as shown by an arrow B in Figure 4, an erasing signal is applied to the auxiliary magnetic gaps 166 and 167 which are located at the trailing side with respect to the primary magnetic gap 121. The auxiliary magnetic gaps 166 and 167 therefore erase portions of the signal recorded on the track 221. As in forward driving of the tape 22, the old signal SO can be completely erased and also portions of the new signal SN recorded out of the track 221 ca be successfully erased. Therefore, in reverse mode recording also, only the new signal SN is recorded in the track 221.

The magnetic head 10 is particularly useful in high-density recording. Figure 5 shows an example of such use, where a plurality of recording tracks Ch-1, Ch-2, Ch-3 and Ch-4 are provided on the magnetic tape 22. As will be understood from the description above, the form and operation of the magnetic head block 10, and in particular the fact that in this case the auxiliary magnetic gaps 146 and 147 are slightly offset from the auxiliary magnetic gaps 166 and 167, ensures creation of adequate guard bands in either direction of recording.

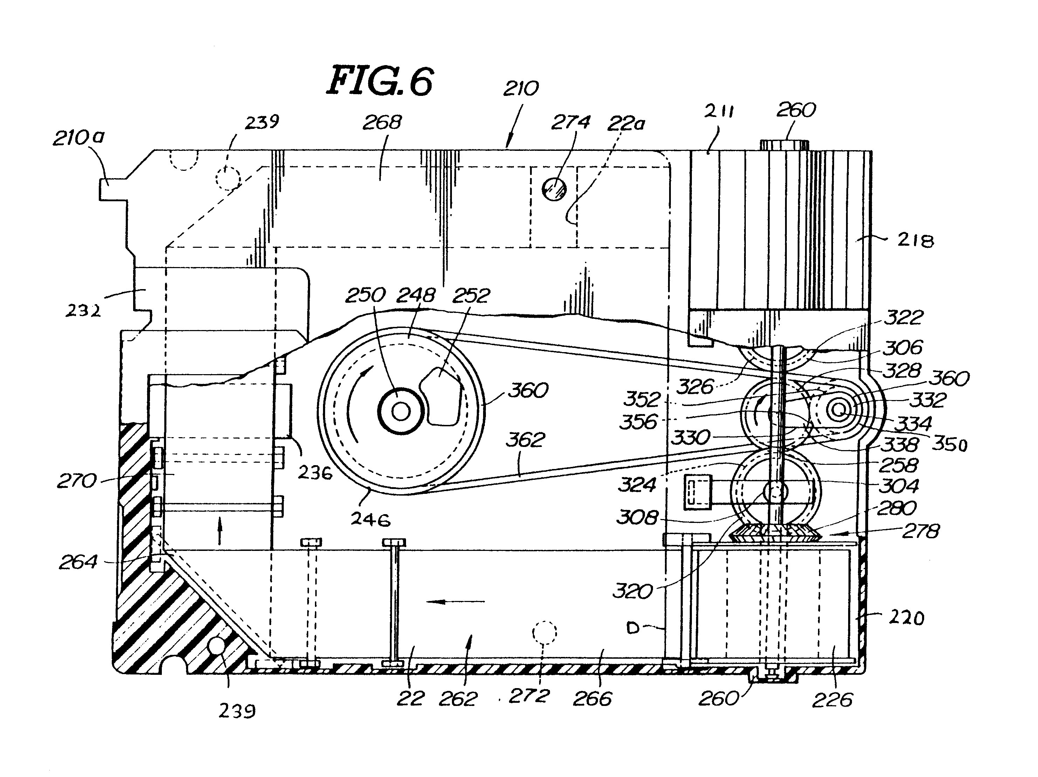

Another example of such use is in association with a magnetic tape cartridge 210 as shown in Figure 6 to which reference will now be made.

The cartridge 210 is formed in a thin, rectangular-box-shaped configuration, which is compatible with a disc drive for floppy discs of corresponding size, such as 3.5 inch (approximately 89 mm) microfloppy discs of the tape disclosed in US-A-4 445 155. However, it should be appreciated that the present invention is applicable to magnetic tape cartridges compatible with disc drives of any size, and to such cartridges using and endless-loop-type tape.

The magnetic tape 22 is housed within the cartridge 210. The cartridge 210 is of substantially the same size and shape as the microfloppy disc cartridge disclosed in US-A-4 445 155, but is longer than that disc cartridge. The length of the normal disc cartridge is illustrated by the line D in Figure 6. Thus, the cartridge 210 has an extra section 211 which accommodates the tape reels, the tape drive mechanism and so forth. When the cartridge 210 is loaded into a disc drive for which it is designed, the extra section 211 will remain outside of the disc drive, protruding from the opening of the disc drive.

The cartridge 210 is further formed with a projection 210a projecting from the front end of the cartridge 210. The projection 210a serves as an indicator for making the disc drive recognize that the cartridge 210 is used.

However, it would be possible to make the cartridge 210 match the floppy disc cartridge not only in width and thickness, but also in length, if necessary.

The cartridge 210 has semi-cylindrical hollow extensions 218 and 220 near its rear corners and along its rear edge ('rear" referring to the direction of insertion into the disc drive). The extensions 218 and 220 extend upwards from the upper surface of the cartridge 210 and thus define tape reel recesses receiving a supply reel 226 and a take-up reel (not visible). A space for a power train, which will be described in detail later, remains between the tape reel recesses.

The cartridge 210 has recesses 232 exposed to the outside on its upper and lower surfaces respectively. Longitudinally (with respect to the direction of insertion) elongated tape access apertures 236 are formed in the upper and lower surfaces within the recesses 232. The tape access apertures 236 are aligned with each other to allow a disc drive head (not shown) of a disc drive access to the tape 22. The disc drive can be the same as or slightly modified from that disclosed in US-A-4 445 155.

The cartridge 210 also has positioning holes 239 for positioning the cartridge 210 within the disc drive. The positioning holes 239 receive positioning pins (not shown) built into the disc drive.

A sliding shutter (not shown) slidingly engages the recesses 232. Upper and lower surfaces of the shutter lie flush with the upper and lower surfaces of the cartridge 210 as assembled. The shutter has longitudinally elongated apertures of the same size and configuration as the tape access apertures 236 of the cartridge 210. The shutter is movable between the closed position, in which its apertures are offset from the tape access apertures 236 and the tape 22 is hidden, and the open position, in which its apertures are aligned with the tape access apertures 236 to allow the disc drive head access to the tape 22. The sliding shutter is normally biased by a spring (not shown) towards the closed position, and is actuated to the open position when the cartridge 210 is inserted into the disc drive.

The cartridge 210 also has a central aperture 246. A centre core disc 248 is rotatably mounted on a boss extending from the lower surface of the upper portion of the cartridge 210 through a bearing, such as an oil-less metal bearing. The centre core disc 248 opposes the central aperture 246 and is thus exposed through the central aperture 246. The centre core disc 248 has a centre positioning aperture 250 and a driving and positioning aperture 252. The driving and positioning aperture 252 is offset by a given distance from the centre positioning aperture 250. The centre positioning aperture 250 is designed to engage a disc drive motor spindle. On the other hand, the driving and positioning aperture 252 is designed to engage a driving pin mounted on a turntable of the disc drive which is driven to rotate by the motor spindle. Therefore, the centre core disc 248 is driven to rotate by the driving force transmitted through the turntable of the disc drive.

The supply reel 226 and the take-up reel are rotatably supported by a support shaft 258, the ends of which are fixed to boss sections 260 formed on the side walls of the extensions 218 and 220 as shown in Figure 6. Therefore, the reels are mounted within the tape reel recesses with their axes lying transversely. A tape run path 262 is defined within the thin space defined in the front portion of the cartridge 210 along which the tape 22 passes between the tape access apertures 236. Tape guides or bars 264 define the tape run path 262. The tape run path 262 has a first section 266 near the supply reel 226 and extending longitudinally along one edge of the cartridge 210, a second section 268 near the take-up reel and extending longitudinally along the other edge of the cartridge 210, and a third section 270 extending laterally across the front edge and between the tape access apertures 236. At the junctures of the first section 266 and third section 270, and of the second section 268 and third section 270, tape guides 264 are provided to deflect the tape 22.

In this description, the word 'longitudinal' used in connection with the tape path, means the axis of movement along the first and second sections 266 and 268 of the tape run path 262, and the word 'lateral' used in connection with the tape path, means the axis of movement along the third section 270 of the tape run path 262.

In order to indicate the ends of the tape 22, transparent or semi-transparent portions such as leader tape sections 22a are formed adjacent to the tape ends. Such a leader tape section 22a can have a known construction and is optically detectable by means of optical tape end detectors which are provided in the disc drive for automatically stopping tape drive or for automatically reversing the tape driving direction. So as to enable the tape end detectors to detect the leader tape sections 12a, the upper and lower portions of the cartridge 210 have circular transparent sections 272 and 274, for example, holes or portions of transparent resin material, opposing the first and second sections 266 and 268 of the tape run path 262.

In order selectively to drive the supply reel 226 and the take-up reel for recording and/or reproduction in forward and reverse directions, the cartridge 210 is provided with a specially designed tape drive mechanism. In general, the take-up reel is driven to extract the tape 22 from the supply reel 226 through the tape run path 262 during recording and reproduction. This tape direction will be hereinafter referred to as 'forward'. On the other hand, the supply reel 226 must be driven to extract the tape 22 from the take-up reel during rewinding. The supply reel 226 drives the tape 22 through the tape run path 262 in the direction opposite to the forward direction. This direction will hereafter be referred to as 'reverse'.

The tape drive mechanism includes a pair of bevel gear blocks 278 (only one is seen) as shown in Figure 6. The bevel gear blocks 278 are generally cylindrical and have bevel gears 280 respectively at one end thereof. The bevel gear blocks 278 are coaxially mounted on the mutually opposing axial ends of the supply reel 226 and the take-up reel. The bevel gear blocks 278 are rotatable with the supply reel 226 and the take-up reel.

A pair of intermediate gear blocks 304 and 306 are rotatably supported by gear shafts 308 extending vertically from the floor of the cartridge 210. The gear shafts 308 are arranged in lateral alignment at a given distance from each other. The distance between the gear shafts 308 is slightly greater than or approximately equal to twice the outer diameter of the intermediate gear blocks 304 and 306. The intermediate gear blocks 304 and 306 have bevel gears 320 and 322 respectively at their upper ends. Respective bevel gears 320 and 322 constantly engage the corresponding bevel gears 280.

The intermediate gear blocks 304 and 306 also have plane gears 324 and 326 below the bevel gears 320 and 322. The plane gears 324 and 326 lie in the same horizontal plane at a given distance from each other. Since the gear shafts 308 are separated by a distance slightly greater than or approximately equal to the outer diameter of the intermediate gear blocks 304 and 306, the distance between the plane gears 324 and 326 is slightly greater than the outer diameter thereof.

A two-way coupling gear 328 is disposed between the plane gears 324 and 326. The two-way coupling gear 328 is mounted on a pivotal base 330. The pivotal base 330 has a cylindrical base section 332 pivotably mounted at the top of a pivot shaft 334 extending vertically from the floor of the cartridge 210. A sleeve bearing is interposed between the inner periphery of the cylindrical base section 332 and the outer periphery of the pivot shaft 334 to allow pivotal movement of the pivotal base 330. The pivotal base 330 also has a pivoting arm 338. A gear shaft extends downward from the pivoting arm 338. Adjacent to its lower end, this gear shaft carries the two-way coupling gear 328. The two-way coupling gear 328 is rotatable about this gear shaft.

A drive gear block 352 is mounted at the lower end of the pivot shaft 334 through a sleeve bearing. The drive gear block 352 has a drive gear 356 constantly engaging the two-way coupling gear 328. The drive gear block 352 also has a pulley integrally formed with the drive gear 356. This pulley is connected to a pulley 360 integral with the centre core disc 248 by means of a driving belt 362.

It should be appreciated that the gear ratio of the aforementioned tape drive mechanism is selected so as to drive the tape 22 at a speed equal to the rotational speed of a floppy disc on the same disc drive. Specifically, the tape speed at the third section 270 of the tape run path 262 has to be equal to the rotational speed of a floppy disc, so that the disc drive can use the same recording and reproduction operations without adjustment.

For a conventional 3.5 inch (approximately 89 mm) floppy disc, rotation is at about 600 r.p.m. so as to be free of peak-shift errors and data drop-out. Therefore, if it is assumed that the linear velocity of the outermost track is V1 and that of the innermost track is V2, it is favourable that the feed rate V of the tape 12 be V2<V<V1.

In order to drive the magnetic tape 22 forward - (from the supply reel 226 onto the take-up reel), the turntable is driven clockwise. With clockwise rotation of the turntable, the centre core disc 248 is driven clockwise. The clockwise rotational force is transmitted from the pulley 360 of the centre core disc 248 to the pulley 358 of the drive gear block 152 through the drive belt 362. Therefore, the drive gear 356 is driven to rotate clockwise in Figure 6.

As long as the two-way coupling gear remains free of the plane gears 324 and 326 of the intermediate gear blocks 304 and 306, a slip plate maintains frictional engagement with the mating surface of the pivoting arm 338 of the pivotal base 330, due to the spring force of a coil spring. Therefore, the rotational force transmitted by the drive gear 356 of the drive gear block 352 to the two-way coupling gear 328 serves to drive the pivotal base 330 to pivot clockwise.

Once the two-way coupling gear 328 comes into engagement with the plane gear 326 of the intermediate gear block 306, pivotal movement of the pivotal base 330 is restricted. Then the rotational driving force transmitted by the drive gear 356 to the two-way coupling gear 328 overcomes the spring force of the coil spring and so causes slip between the mating surfaces of the slip plate and the pivoting arm 338. As a result, the two-way coupling gear 328 starts to rotate counter-clockwise, thereby driving the plane gear 326 of the intermediate gear clockwise. The bevel gear 322 of the intermediate gear block 306 thus rotates clockwise, which causes the bevel gear 276 to drive the take-up reel to wind in the tape 22.

When the cartridge 210 is unloaded and released from the disc drive, or otherwise, the turntable of the disc drive is forcibly stopped, coil springs (not shown) serving to restrict rotation of the intermediate gear blocks 304 and 306. Since the bevel gears 320 and 322 of the intermediate gear blocks 304 and 306 are constantly engaged with the bevel gears 280, rotation of the supply reel 226 and the take-up reel is also restricted by means of these coil springs. Therefore, even when release of the cartridge 210 from the turntable of the disc drive is stopped abruptly, slackening of the tape 22 due to over-running of the tape reels is prevented.

On the other hand, in order to switch from forward to reverse, the direction of rotation of the turntable is switched from clockwise to counter-clockwise. With counter-clockwise rotation of the turntable, the centre core disc 248 is driven counter-clockwise. The counter-clockwise rotational force is transmitted from the pulley 360 of the centre core disc 248 to the pulley of the drive gear block 352 through the driving belt 362. Therefore, the drive gear 356 is driven counter-clockwise in Figure 6.

As long as the two-way coupling gear 328 remains free of the plane gear 324 of the intermediate gear block 304, the slip plate maintains frictional engagement with the mating surface of the pivoting arm 338 of the pivotal base 330 due to the spring force of the coil spring as the two-way coupling gear 328 becomes free from the clockwise rotational force of the drive gear 356. Therefore, the counter-clockwise rotational force transmitted by the drive gear 336 of the drive gear block 352 to the two-way coupling gear 328 serves as a driving force for the pivotal base 330, causing the pivotal base 330 to pivot counter-clockwise in Figure 6.

Once the two-way coupling gear 328 comes into engagement with the plane gear 324 of the intermediate gear block 304, pivotal movement of the pivotal base 330 is restricted. Then, the rotational driving force transmitted by the drive gear 356 to the two-way coupling gear 328 overcomes the spring force of the coil spring, causing slip between the mating surfaces of the slip plate and the pivoting arm 338. As a result, the two-way coupling gear 328 starts to rotate clockwise. thus driving the plane gear 324 of the intermediate gear 304 counter-clockwise. The bevel gear 320 of the intermediate gear block 104 is thus rotated clockwise, causing the bevel gear 280 to drive the supply reel 326 to rewind the tape 22.

In the embodiment, magnetic tape 22 three-quarters inch (approximately 19 mm) wide is employed in the cartridge 210. In this case, eighty recording tracks can be formed, which corresponds to the number that can be formed on a 3.5 inch (approximately 89 mm) floppy disc. Each track formed on the tape 22 extends longitudinally along the tape 22. It will be appreciated that the length of each track depends solely on the length of the tape 22, and so can be substantially longer than the length of the recording tracks formed on a 3.5 inch (approximately 89 mm) floppy disc. In general, the capacity of each track on the tape 22 will be several tens of times greater than that of a track on a floppy disc. If the tape 22 is 12 m long, the capacity of the cartridge 210 will be approximately 20 megabytes.

In this operation, one of the leader tape sections 22a of the tape 22 is detected by one of the tape end detectors. The tape end detector detecting the leader tape section 22a produces a detector signal for stopping drive of the tape 22 or reversing the tape driving direction.

Since a preferred embodiment of the magnetic tape cartridge 210 has the transparent section 272 and 274 formed of a transparent resin material, entry of dust into the cartridge 210 can be prevented. This eliminates or at least significantly reduces the possibility of read/write error resulting from damage to the tape 22. This is very important when utilizing such a cartridge 210 as back-up storage for a computer.

The present invention is applicable to any of magnetic tape cartridge compatible with disc drives.

## Claims

1. A magnetic head (10) for recording and reproducing information on a magnetic tape (22) having a plurality of recording tracks (221) thereon, the magnetic head (10) comprising:

a first magnetic gap (12) for recording and reproducing information on each of said recording tracks (221) of said magnetic tape (22); and

a second magnetic gap (146, 147) positioned at one side of said first magnetic gap (121), said second magnetic gap (146, 147) being arranged to erase recorded information on an associated recording track (221) leaving a predetermined track width of recorded information, in response to an erase signal;

characterised by:

a third magnetic gap (166, 167) positioned at the other side of said first magnetic gap (121), said third magnetic gap (166, 167) being arranged to erase recorded information on an associated recording track (221) leaving said predetermined track width of recorded information, in response to said erase signal; and

means for selectively applying said erase signal to one of said second and third magnetic gaps (146, 147, 166, 167) according to the tape driving direction.

2. A combination of a disc drive and a magnetic tape cartridge (210);

characterised by:

a disc drive including a disc drive head (10) formed by a magnetic head (10) comprising:

a first magnetic gap (121) for recording and reproducing information on recording tracks (221) of a magnetic tape (22);

a second magnetic gap (146, 147) positioned at one side of said first magnetic gap (121), said second magnetic gap (146, 147) being arranged to erase recorded information on an associated recording track (221) leaving a predetermined track width of recorded information, in response to an erase signal;

a third magnetic gap (166, 167) positioned at the other side of said first magnetic gap (121), said third magnetic gap (166, 167) being arranged to erase recorded information on an associated recording track (221) leaving said predetermined track width of recorded information, in response to said erase signal; and

means for selectively applying said erase signal to one of said second and third magnetic gaps (146, 147, 166, 167) according to the tape driving direction;

and by:

said magnetic tape cartridge (210) being a disc-drive-compatible magnetic tape cartridge (210) comprising:

said magnetic tape (22) suitable for transferring data between said magnetic tape (22) and said disc drive head (10);

means (264) for registering a portion (270) of said magnetic tape (22) at a location at which data can be transferred between said magnetic tape (22) and said disc drive head (10);

means (328, 262) for feeding said magnetic tape (22) past said location; and

means (226) for storing said magnetic tape (22).

3. A combination according to claim 2 wherein said means (264) for registering comprises:

means (239) for aligning said tape cartridge (210) with the disc drive when said tape cartridge (210) is loaded onto the disc drive; and

means (264) for guiding said magnetic tape (22) within said tape cartridge (210) such that, when said tape cartridge (210) is aligned with said disc drive, said magnetic tape (22) is registered with said location.

4. A combination according to claim 3 wherein said means (226) for storing said magnetic tape (22) comprises a pair of tape reels (226) having aligned rotational axes.

5. A magnetic head (10) or a combination according to claim 1 or claim 2 wherein each of said second and third magnetic gaps (146, 147, 166, 167) comprises separated first and second components (141, 143, 161, 163) separated from each other with a clearance therebetween, the width of said clearance corresponding to said predetermined track width to be left on the recording track (221).

6. A magnetic head (10) or a combination according to claim 1 or claim 2 wherein said means for selectively applying said erase signal selects one of said second and third magnetic gaps (146, 147, 166, 167) positioned at the trailing side of said first magnetic gap (121) in relation to a driving direction of said magnetic tape (22).

7. A magnetic head (10) or a combination according to claim 6 wherein each of said second and third magnetic gaps (146, 147, 166 and 167) comprises separated first and second components (141, 143, 161, 163) separated from each other with a clearance therebetween, the width of said clearance corresponding to said predetermined track width to be left on the recording track (221), and said clearance being smaller than the length of said first magnetic gap (121).

8. A magnetic head (10) or a combination according to claim 7 comprising first, second and third head blocks (12, 14, 16) magnetically shielded from each other, said first block (12) being positioned between said second and third blocks (14, 16) and formed with said first magnetic gap (121), and said second and third blocks (14, 16) being respectively formed with said second and third gaps (146, 147, 166, 167).

9. A magnetic head (10) or a combination according to claim 8 wherein each of said second and third blocks (14, 16) is divided into first, second and third sub-blocks (142, 141, 143, 162, 161, 163) magnetically shielded from each other, said first sub-block (142, 162) being interposed between said second and third sub-blocks (141, 143, 161, 163), and first and second components (146, 147, 166, 167) of said second and third magnetic gaps (146, 147, 166, 167) being formed parallel to said first magnetic gap (121) in said second and third sub-blocks (141, 143, 161, 163).

10. A magnetic head (10) or a combination according to claim 9 wherein the length of said first magnetic gap (121) is so selected that half the difference between the length (D1) of the first magnetic gap (121) and the height (D2) of the first sub-block (142, 162) of each of said second and third head blocks (14, 16) corresponds to a possible maximum offset (E) in positioning of the magnetic tape (22), and that half the difference between the overall height (D3) of the magnetic head (10) and the length of the first magnetic gap (121) is in the range of zero to the possible maximum offset (E) in positioning of the magnetic tape (22).

11. A magnetic head (10) or a combination according to claim 9 wherein each of said first and second components (146, 147, 166, 167) of said second and third magnetic gaps (146, 147, 166, 167) has an overlapping section, overlapping with an associated end section of said first magnetic gap (121), of a predetermined magnitude for erasing signals on the recording track (221) overlapping with said first and second components (146, 147, 166, 167).

12. A magnetic head (10) according to claim 1 wherein said magnetic tape (22) is housed within a disc-drive-compatible magnetic tape cartridge - (210) comprising:

means (264) for defining a tape run path (262) for passing said magnetic tape (22) across said magnetic head (10) serving as a disc drive head of a disc-drive for transferring data between said magnetic tape (22) and said disc-drive head (10); and means (226) for storing said magnetic tape (22).

*FIG.2*

*FIG.1*

*FIG.3*

*FIG.4*

*FIG.5*

# FIG.6

0 228 903